# EUROPEAN PATENT SPECIFICATION

(11) **EP 3 964 801 B1**
(45) Date of publication and mention of the grant of the patent: **25.12.2024**
(21) Application number: 20195012.8
(22) Date of filing: 08.09.2020
(51) Int. Cl.: G01F 1/66, B23B 29/02, B23B 29/03, B23B 51/10, B23C 3/05

(54) **AN ULTRASONIC FLOW METER FLOW TUBE AND A METHOD FOR MANUFACTURING THE FLOW TUBE**
DURCHFLUSSROHR MIT ULTRASCHALLDURCHFLUSSMESSER UND VERFAHREN ZUR HERSTELLUNG DES DURCHFLUSSROHRES
TUBE D'ÉCOULEMENT DE DÉBITMÈTRE À ULTRASONS ET PROCÉDÉ DE FABRICATION DU TUBE D'ÉCOULEMENT

(43) Date of publication of application: 09.03.2022
(73) Proprietor: Kamstrup A/S, 8660 Skanderborg (DK)
(72) Inventor: Borring, Peter Nordlund, DK-8660 Skanderborg (DK)
(74) Representative: Plougmann Vingtoft a/s

(56) References cited:
- WO-A2-2005/009657
- DE-A1- 3 928 597
- US-A- 1 649 899
- US-A- 5 149 231
- US-A1- 2012 251 257
- US-A1- 2015 268 077
- US-A1- 2020 072 649
- US-B2- 6 904 811
- US-B2- 8 506 210

## Description

### FIELD OF THE INVENTION

The present invention relates to a ultrasonic flow meter flow tube and a method for manufacturing the flow tube.

### BACKGROUND OF THE INVENTION

An ultrasonic flow meter of the type described herein can be used for measuring a flow of fluid, such as an amount of liquid or gas flowing into, through or out of a fluid system at a consumer such as a household or an industrial facility.

In an ultrasonic flow meter, the measuring results follow from transmitting and receiving ultrasonic signals upstream and downstream of a flow direction in the flow meter flow tube. Various means for increasing the precision of the measurements may interfere in costs of producing, assembling or maintaining the flow meter.

It is essential for the precision of the measurements that the transducers are aligned in the flow tube to form a soundtrack between a pair of transducers. The transducers are placed in transducer housings, and the housings positioned in transducer holders in the flow tube. However, manufacturing a pair of opposite placed transducer holders to be perfectly aligned in a flow tube is difficult due to misalignments during manufacture of the transducer holders.

Document US 6 904 811 B2 relates to an ultrasonic flowmeter including bores with seat surfaces that are machined with precision.

Document US 8 506 210 B2 relates to a machining tool.

Hence, an improved alignment of opposite placed transducers holders in a flow tube would be advantageous, and in particular a more efficient and/or reliable method of manufacture of transducer holders to improve the alignment between a pair of opposite placed transducer holders would be advantageous.

### OBJECT OF THE INVENTION

It is an object of the present invention to provide an improved method for manufacturing an ultrasonic flow meter.

In particular, it may be seen as an object of the present invention to provide a ultrasonic flow meter that solves the above mentioned problems of the prior art with increased precision in manufacture of the transducer holders of the ultrasonic flow meter.

### SUMMARY OF THE INVENTION

Thus, the above described object and several other objects are intended to be obtained in a first aspect of the invention by providing a method of manufacturing an ultrasonic flow meter flow tube, wherein the flow tube comprising transducer holders, each transducer holder comprising an opening and a transducer seat for mounting of a transducer housing, and each transducer holder is forming a pair of transducer holders with an opposite placed transducer holder,
characterized by the following steps:
- providing a transducer seat-machining tool for machining the transducer seat of one of the pair of transducer holders, the transducer seat-machining tool comprising a tool head mechanically connectable to a guide shaft,
- mechanically connecting the tool head and the guide shaft,
- mechanically guiding the tool head by a part of the transducer seat-machining tool engaging with the transducer holder opposite placed to the transducer holder to be machined,
- machining the transducer seat of the transducer holder to be machined with the tool head;

- each of the pair of transducer holders comprises a guide hole, and the tool head comprises a guide bushing, the method further comprises the following steps:
   - guiding the tool head of the transducer seat-machining tool, ensuring the surface of the transducer seat is perpendicular to a coaxial axis, by positioning the guide bushing in the guide hole of the transducer holder to be machined, and positioning the guide shaft or the guide bushing in a position engaging the guide hole of the opposite placed transducer holder.

The pair of transducer holders are located opposite to each other in each side of the flow tube, so that a sound track can be transmitted from a transducer housing placed in a transducer holder to the transducer housing placed in the opposite placed transducer holder.

It is essential for the precision of the flow measurements in an ultrasonic flow meter that the transducer housings, comprising the transducers, are precisely aligned to form a sound track between the transducer housings. The transducer housings therefore preferably comprising a coaxial axis with the transducer housings aligned to send an ultrasonic signal to the opposite aligned transducer housing.

It is usually quite difficult to align a pair of two opposite placed transducer holders in a flow tube on a coaxial axis. Because, when machining a transducer seat in a transducer holder, this is usually done individually before joining - by welding or by screwing - the transducer holders to the flow tube, and therefore there will usually be a misalignment because it is difficult to screw or weld a transducer holder to the flow tube and at the same time obtain a precise alignment, as the alignment of the transducer holders may by imprecise due to the mounting surfaces of the transducer seats of the pair of transducer holders are not perfectly aligned to be precisely perpendicular to the coaxial axis.

In the invention described herein, this problem is solved by using a transducer seat-machining tool, which machines the transducer seats in the transducer holders, after they have been joined to the flow tube, to align the transducer seats, such that the mounting surfaces of the transducer seats for a pair of opposite placed transducer holders are aligned to be precisely perpendicular to the coaxial axis.

Aligned on a coaxial axis means that a sound track transmitted from the transducer, placed inside a transducer housing, precisely hits the opposite placed transducer housing in a centred position. The centre of the sound track hits exactly the centre of the opposite placed transducer housing. This is ensured by that the mounting surface of the transducer seats are precisely perpendicular to the coaxial axis.

The machining tool comprising a tool head and a guide shaft. The tool head and the guide shaft are mechanical connected. They can be screwed together or pushed together and secured with a screw or similar. The transducer seat to be machined is machined by the tool head.

The transducer seat can either be machined from inside the flow tube or from outside the flow tube, depending on whether the mounting surface of the transducer seat is facing inward of outward. If the mounting surface is facing inward, the tool head is placed inside the flow tube and are mechanical connected to the guide shaft; the guide shaft is going through the opening of the transducer holder placed opposite to the one to be machined. If the mounting surface is facing outward, the tool head is placed outside the flow tube and mechanical connected to the guide shaft outside the flow tube.

To ensure the transducer holder is precisely aligned, when machining the transducer seat of one of the transducer holders, a part of the transducer seat-machining tool is guiding the tool head of the transducer seat-machining tool by engaging with the opposite placed transducer holder. That is, when machining a transducer seat of a transducer holder forming one part of a pair of opposite placed transducer holders, the opposite placed transducer holder is guiding the transducer seat-machining tool by the transducer seat-machining tool is engaging the opposite placed transducer holder. Thereby, the opposite placed transducer holder will be a guide and support for the transducer seat-machining tool, so the transducer seat being machined will be aligned precisely with the opposite placed transducer holder.

By machining the transducer seat, when the transducer holder is part of the flow tube, and using the opposite placed transducer holder as a guide and a support for the machining tool, a very high accuracy can be obtained in aligning the transducer holders to a coaxial axis.

Thereby, by engaging both transducer holders in the pair of transducer holders, the transducer seat-machining tool is aligned precisely to machine the transducer seat, so that a transducer housing mounted in the transducer seat will be aligned directly towards the opposite placed transducer housing, when mounted, having a precisely aligned coaxial axis.

When the transducer seat-machining tool is in position, engaging both transducer holders, the transducer seat-machining tool machines the transducer seat. When machining, the machining tool rotates and cuts away excess material from the transducer seat to make the surface of the transducer seat completely flat, with a surface to support a transducer housing directly aligned towards the opposite placed transducer housing.

According to an embodiment, the method comprises that each of the pair of transducer holders comprising a guide hole, and the tool head comprising a guide bushing, the method comprises the following steps:
- guiding the tool head of the transducer seat-machining tool, ensuring a surface of the transducer seat is perpendicular to a coaxial axis, by
   ∘ positioning the guide bushing in the guide hole of the transducer holder to be machined, and
   ∘ positioning the guide shaft or the guide bushing in a position engaging the guide hole of the opposite placed transducer holder.

In the case where the transducer seat is to be machined from inside the flow tube, the tool head is placed inside the flow tube and the guide bushing is positioned in the guide hole of the transducer holder comprising the transducer seat to be machined. The guide shaft then is engaging the opposite placed transducer holder going through and being guided by the guide hole in the opposite placed transducer holder.

In the case where the transducer seat is to be machined from the outside of the flow tube, the tool head is placed outside the flow tube. The guide bushing is entering the flow tube through the opening of the transducer holder to be machined, and is going all the way through the flow tube to engage with and possible go through the guide hole of the opposite placed transducer holder.

In both cases a part of the transducer seat-machining tool is engaging the guide hole of the opposite placed transducer holder, guiding and supporting the tool head.

According to an embodiment, the method comprises that the tool head comprising a transducer seat-cutting tool, and the method further comprises the following steps:
- positioning the transducer seat-machining tool in a position, wherein a transducer seat-cutting tool is engaging the transducer seat of the transducer holder,
- machining the transducer seat by the transducer seat-cutting tool.

The tool head comprising a transducer seat-cutting tool, and the transducer seat-machining tool is positioned so that the transducer seat-cutting tool is engaging the transducer seat to be machined and the transducer seat-cutting tool is machining the transducer seat cutting away excess material.

According to an embodiment, the method comprises that machining the transducer seat comprises the following steps:
- rotating the transducer seat-machining tool,
- cutting away access material of the transducer seat by the transducer seat-cutting tool.

When machining the transducer seat, the transducer seat-machining tool is rotating, and the transducer seat-cutting tool is cutting away access material of the transducer seat. A drill can be used for rotating the transducer seat-machining tool. The guide shaft has a drill connector in the second end of the guide shaft, to which a drill can be connected and the drill then can rotate the transducer seat-machining tool.

According to an embodiment, the method comprises that the tool head comprising a stop bushing, and the transducer seat-machining tool, machining the transducer seat, stops machining, when the stop bushing gets in contact with the flow tube.

To ensure the depth of the cutting of the transducer seat is correct, the tool head comprising a stop bushing. When the stop bushing hits the flow tube, it may hit the wall of the flow tube, or it may hit a part of the transducer holder. The transducer seat-machining tool can then go no further, the machining stops, and the transducer seat has the right position for mounting of the transducer housing. According to an embodiment, the method further comprises the step: placing the tool head of the transducer seat-machining tool inside the flow tube.

According to an embodiment, the method further comprises the step: placing the tool head of the transducer seat-machining tool outside the flow tube.

Either the tool head can be inside the flow tube, machining the transducer seat from inside the flow tube, or the tool head can be outside the flow tube, machining the transducer seat from outside the flow tube.

When machining the transducer seat from inside the flow tube, the guide shaft is going through the opposite placed transducer holder and is mechanically connected to the tool head inside the flow tube. In this embodiment, with the tool head engaging the transducer holder comprising the transducer seat to be machined, and the guide shaft engaging the corresponding opposite placed transducer holder, the transducer seat-machining tool is guided by and anchored in the opposite placed transducer holder.

When machining the transducer seat from outside the flow tube, the guide shaft and the tool head are mechanically connected outside the flow tube. Part of the flow head is then going through the opening in the transducer holder comprising the transducer seat being machined and continues through the flow tube to engage the opposite placed transducer holder.

According to an embodiment, the method comprises that each of the transducer holders comprising a guide hole and a guide hole wall,
the method further comprises the following steps:
- providing a guide hole-machining tool, the guide hole-machining tool comprising a control rod and a guide shaft,
- positioning the guide shaft in a position going through the opening of one of the pair of transducer holders,
- positioning the control rod in a position going through the opening of the corresponding opposite placed transducer holder,
- mechanically connecting the control rod and the guide shaft, and
- machining the guide hole walls by the guide hole-machining tool.

To guide the transducer seat-machining tool the transducer holders may comprise a guide hole. The guide hole is a narrowing in the opening in the transducer holder forming some kind of a throat in the opening. The guide hole comprising a guide hole wall, and the guide hole wall is machined by a guide hole machining tool. The guide hole-machining tool comprising two parts, the control rod and the guide shaft, the control rod enters the flow tube through the opening of one of the pair of transducer holders and the guide shaft enters the flow tube through the opening of the opposite placed transducer holder. The two parts are mechanical connected, for instance screwed together, when they meet inside the flow tube.

When the guide hole-machining tool has entered the flow tube and has been mechanical connected, the guide hole-machining tool is first machining the guide hole wall of the guide hole of one of the pair of transducer holders, and the guide hole-machining tool is then moved to machine the opposite placed transducer holder.

According to an embodiment, the method comprises that the guide hole-machining tool comprising a guide hole-cutting tool mounted between the control rod and the guide shaft, and machining the guide hole walls by the guide hole-machining tool,
the method further comprises the following steps:
- positioning the guide hole-machining tool in a position, wherein the guide hole-cutting tool is engaging the guide hole wall of one of the transducer holders in the pair of transducer holders, and
- machining the engaged guide hole wall with the guide hole-cutting tool,
- moving the guide hole-machining tool to a position, wherein the guide hole-cutting tool is engaging the guide hole wall of the opposite placed transducer holder in the pair of transducer holders, and
- machining the engaged guide hole wall of the opposite placed transducer holder with the guide hole-cutting tool.

The guide hole-machining tool comprising a guide hole-cutting tool. The guide hole-cutting tool may be a part of the control rod or fixed to the control rod. When the control rod and the guide shaft are joined together, the position of the guide hole-cutting tool will typically be between the two parts.

When the guide hole-machining tool is mechanical connected with the control rod, going through the opening of one of the transducer holders, and the guide shaft going through the opening of the opposite placed transducer holder, the guide hole-machining tool is positioned, so that the guide hole-cutting tool is engaging the guide hole wall for one of the transducer holders. Then, when machining, the guide hole-machining tool is rotating and is cutting away material from the guide hole wall. When the machining is completed, the guide hole-machining tool is moved to a position, so that the guide hole-cutting tool is engaging the guide hole wall for the opposite placed transducer holder, and is then machining the guide hole wall of the opposite placed transducer holder.

With the guide hole-machining tool going through the openings of both transducer holders when machining, the guide hole-machining tool is supported and guided be the opposite placed transducer holder when machining the guide hole wall of a transducer holder. This ensures the guide holes will be precisely aligned to support the transducer seat-machining tool when machining the transducer seats.

When machining the guide hole, the guide hole-machining tool is rotating, and the guide hole-cutting tool is cutting away access material of the guide hole. A drill can be used for rotating the guide hole-machining tool. The guide shaft has a drill connector in the end of the guide shaft, to which a drill can be connected and the drill then can rotate the guide hole-machining tool.

According to an embodiment, the method comprises that the method further comprises the step casting the flow tube, the flow tube comprising transducer holders cast integrally with the flow tube.

The transducer holders may be cast integrally into the flow tube, so the flow tube is cast with the transducer holders. When casting the transducer holders integrally with the flow tube, the transducer seats are usually not perfectly flat and aligned and need machining.

According to an embodiment, the method comprises that the method further comprises the following steps:
- casting the flow tube without transducer holders, and
- welding the transducer holders into the flow tube.

Alternatively, the transducer holders may be cast or otherwise manufactured separately and later welded into the flow tube. When welded into the flow tube, the transducer seat of the transducer holder may not be precisely aligned with coaxial axis with the opposite place transducer holder, and therefore the transducer seats needs machining, after the transducer houses is welded into the flow tube, to ensure precisely alignment to the coaxial axis.

In a second aspect, the invention relates to a ultrasonic flowmeter flow tube , wherein the flow tube comprising transducer holders, each transducer holder comprising an opening and a transducer seat for mounting of a transducer housing, each transducer holder forms a pair of transducer holders with an opposite placed transducer holder, and the pair of transducer holders holds a pair of transducer housings, the transducer seat comprising a mounting surface,
characterized in that
   - the pair of transducer housings comprising a coaxial axis, and
   - the mounting surface of the transducer seats of the pair of transducer holders are perpendicular to the coaxial axis,
forming a direct sound track between the pair of transducer housings.

The flow tube comprising a pair of transducer holders, in the transducer holders are mounted transducer housings, so the transducer housings forms a pair of transducer housings precisely aligned on a coaxial axis.

The mounting surface of the transducer seats are cut, so they are perpendicular to the coaxial axis.

According to an embodiment, the alignment of the pair of transducer houses deviates from the coaxial axis with less than 0.1 degrees.

It is usually quite difficult to obtain a coaxial axis between two opposite placed transducer housings in a flow tube. Because, when machining a transducer seat in a transducer holder, this is usually done individually before joining the transducer housing to the flow tube and therefore, there usually are a misalignment.

By machining the transducer seat, when the transducer holder is part of the flow tube, and using the opposite placed transducer holder as a guide and a support for the machining tool, a very high accuracy can be obtained in aligning the transducer housing to a coaxial axis.

The alignment may be so precise that the alignment of the transducer houses deviates from the coaxial axis with less than 0.1 degrees.

According to an embodiment, the flow tube comprising an additional pair of transducer holders holding an additional pair of transducer housings, and the additional pair of transducer holders comprising a coaxial axis.

A flow tube may often comprise an additional pair of transducer holders comprising an additional pair of transducer holders. This is an advantage because addition pairs makes it possible to measure flow speed different places in the flow tube giving better measurements of the flow in the flow tube. Additional pairs of transducer holders are machined by the same methods of this invention as described.

According to an embodiment, the plurality of coaxial axis for the pairs of transducer holders are parallel.

The pairs of transducer holders are having a parallel coaxial axis, so all pairs of transducer holders are precisely aligned. It is not just two transducer holders in one pair of transducer holders that are perfectly aligned on a coaxial axis, but also all pairs of transducer holders are aligned perfectly on a coaxial axis of rotation precisely parallel to the axis for the other pairs of transducer holders.

The transducer holders may be cast into the flow tube, so the flow tube is cast integrally with the transducer holders. Alternatively, the transducer holders may be cast separately and later welded into the flow tube.

### BRIEF DESCRIPTION OF THE FIGURES

The ultrasonic flowmeter flow tube and the method for manufacturing the flow tube according to the invention will now be described in more detail with regard to the accompanying figures. The figures show one way of implementing the present invention and is not to be construed as being limiting to other possible embodiments falling within the scope of the attached claim set.
Fig. 1a and 1b Fig. 1a illustrates an ultrasonic flow meter comprising a flow tube.
Fig. 2 illustrates an exploded view of the ultrasonic flow meter comprising a flow tube with transducer housings mounted from inside the flow tube.
Fig. 3 illustrates an exploded view of the ultrasonic flow meter comprising a flow tube with transducer housings mounted from outside the flow tube.
Fig. 4a and 4b illustrates the use of the guide hole-machining tool.
Fig. 5 illustrates the guide hole-machining tool.
Fig. 6a and 6b illustrates the use of the transducer seat-machining tool.
Fig. 7a and 7b illustrates an embodiment of the transducer seat-machining tool, where the tool head is placed inside the flow tube.
Fig. 7c illustrates the tool head.
Fig. 8a and 8b illustrates an embodiment of the transducer seat-machining tool, where the tool head is placed outside the flow tube.
Fig. 9a and 9b illustrates a flow tube comprising an additional pair of transducer holders.

### DETAILED DESCRIPTION OF AN EMBODIMENT

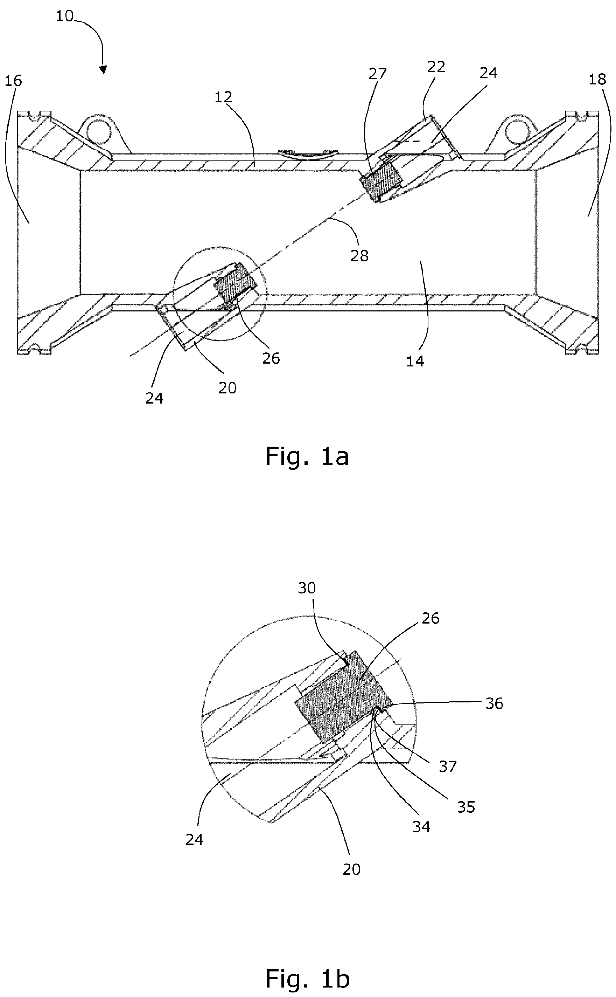

Fig. 1a illustrates an ultrasonic flow meter 10 comprising a flow tube 12. The flow tube 12 comprising a flow passage 14, an inlet 16 and an outlet 18 with a flow direction running from the inlet 16 to the outlet 18. The flow tube 12 comprising a pair of opposite placed transducer holders 20, 22. Each transducer holder 20, 22 comprising an opening 24 for mounting of a transducer housing 26, 27. The transducers housings 26, 27 mounted in the pair of transducer holders 20, 22 forms a coaxial axis 28 between transducer housings 26, 27. A gasket 30 between the transducer housing 26, 27 and the flow tube 12 is sealing the flow tube 12. The opening 24 comprising a guide hole 34 and a transducer seat 36 for mounting of the transducer housing 26, 27. The transducer seat 36 comprising a mounting surface 37.

Fig. 1b, which is an enlarged section of the part encircled in Fig. 1a, shows one of the pair of transducer holders 20 with the transducer housing 26 mounted in the opening 24. Further fig. 1b shows the guide hole 34 and the transducer seat 36 and the mounting surface 37 of the transducer seat 36. When mounted the transducer housing 26 rest against the mounting surface 37, with the gasket 30 sealing the assembly.

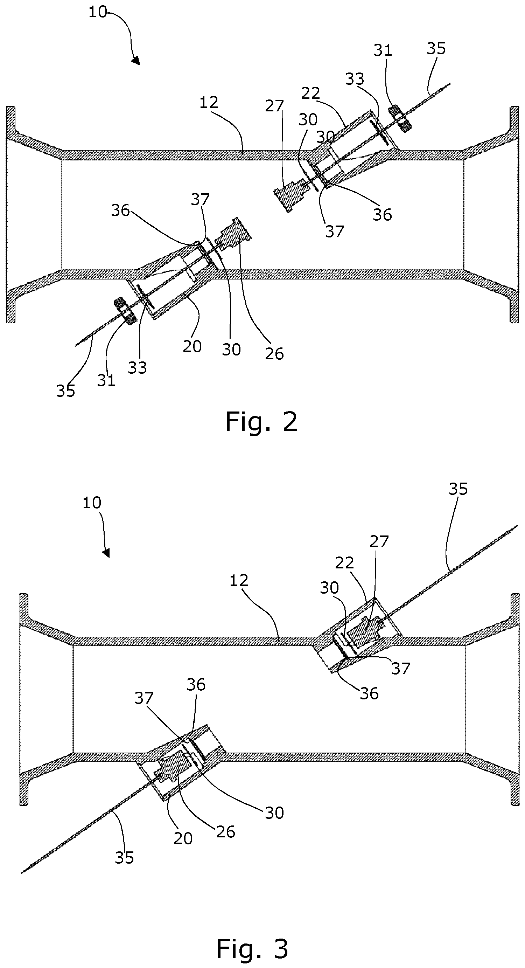

Fig. 2 illustrates an exploded view of the ultrasonic flow meter 10 comprising a flow tube 12 and a pair of opposite placed transducer holders 20, 22 with the transducer housings 26, 27 mounted from inside the flow tube 12. The transducer housings 26, 27 are mounted in the transducer holders 20, 22. Each transducer housing 26, 27 is sealed by a gasket 30. When the transducer housing 26, 27 is mounted in the transducer holders 20, 22, the transducer housing 26, 27 is fixed with a nut 31 and a washer 33. Each transducer housing 26, 27 is mounted in the transducer seat 36 against the mounting surface 37. Each transducer housing 26, 27 is connected by a wire 35 to a controller (not shown).

Fig. 3 illustrates an exploded view of the ultrasonic flow meter 10 comprising a flow tube 12 and a pair of opposite placed transducer holders 20, 22 with the transducer housings 26, 27 mounted from outside the flow tube 12. The transducer housings 26, 27 are mounted in the transducer holders 20, 22. Each transducer housing 26, 27 is sealed by a gasket 30. When the transducer housing 26, 27 is mounted in the transducer holders 20, 22, the transducer housing 26, 27 is fixed with a nut (not shown). Each transducer housing 26, 27 is mounted in the transducer seat 36 against the mounting surface 37. Each transducer housing 26, 27 is connected by a wire 35 to a controller (not shown).

The advantage of using a gasket 30 to seal the opening is that avoiding using an O-ring is reducing the risk of a leak over time.

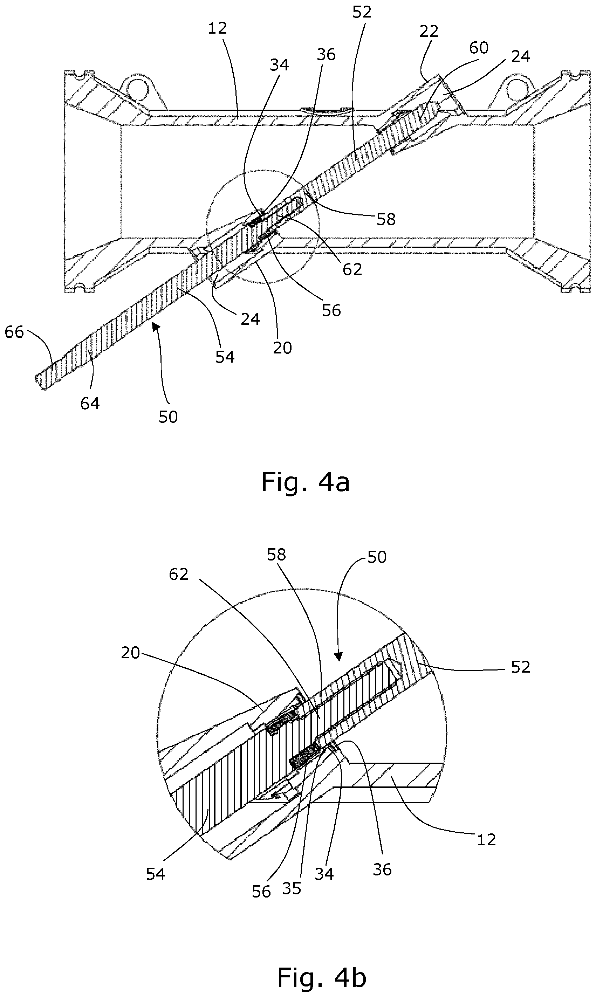

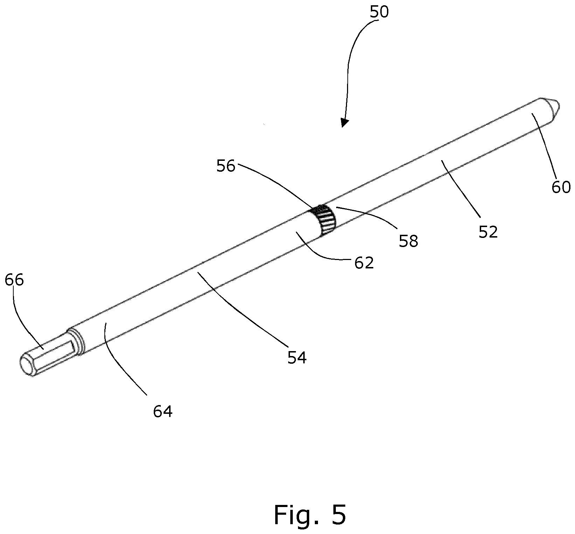

Fig. 4a illustrates the use of the guide hole-machining tool 50. The guide hole-machining tool 50, also illustrated in fig. 5, comprising a control rod 52 and a guide shaft 54. The guide hole-machining tool 50 also comprising a guide hole-cutting tool 56. When using the guide hole-machining tool 50, the first end 58 of the control rod 52, is inserted through the opening 24 of the transducer holder 22, and the first end 62 of the guide shaft 54 is inserted through the opening 24 of the transducer holder 20. The guide hole-cutting tool 56 is mounted on the first end 62 of the guide shaft 54, before the guide shaft is entered into the flow tube 12. The first end 58 of the control rod and the first end 62 of the guide shaft are mechanically joined together inside the flow tube 12. For instance the control rod 52 and the guide shaft 54 can be screwed together to form the guide hole-machining tool 50 with the guide hole-cutting tool 56 fixed between the two parts.

Fig. 4b, which is an enlarged section of the part encircled in Fig. 4a, shows an enlarged section of the transducer holder 20, with the guide hole-machining tool 50 going through the opening in the transducer holder 20 ready to start machining the guide hole wall 35. When the control rod 52 and the guide shaft 54 of the guide hole-machining tool 50 is mechanical connected, the guide hole-machining tool 50 is positioned in a position, wherein the guide hole-cutting tool 56 is engaging the guide hole 34 of the transducer holder 20. The guide hole-machining tool 50 is machining the guide hole 34 of the transducer holders 20. When finished machining the guide hole 34 in the transducer holder 20, the guide hole-machining tool 50 is moved to a position, where the guide hole-cutting tool 56 is engaging the guide hole of the opposite placed transducer holder 22, and is machining the guide hole 34 of the opposite placed transducer holder 22.

The second end 60 of the control rod 52 is supporting the guide hole-machining tool 50, when machining the guide holes 34 of the transducer holder 20 by being guided by the guide hole 34 of the transducer holder 22. This ensures stability and precision in machining the guide hole 34. When the guide hole 34 of the transducer holder 22 is to be machined, the guide hole-machining tool 50 is pushed through the openings 24 of the transducer holders 20 until the guide hole-cutting tool 56 is engaging the guide hole 34 of the transducer holder 22. Now the stability and the precision of the machining is ensured by the second end 64 of the guide shaft being supported by the guide hole 34 or the transducer holder 20.

The cutting is done by rotating the guide hole-machining tool 50. The guide hole-cutting tool 56, when being rotated, is cutting away excess material in the guide hole 34 being machined. The rotating may be done by using a drill. The guide hole-machining tool 50 may be connected to a drill by a drill connector 66 located at the second end 64 of the guide hole-machining tool 50.

Fig. 5 illustrates the guide hole-machining tool 50 comprising the control rod 52, the guide shaft 54 and the cutting tool 56. The control rod 52 comprising a first end 58 and a second end 60. The guide shaft 54 comprising a first end 62 and a second end 64, and a drill connector 66 as part of the second end 64. The cutting tool is fixed to the first end of the guide shaft 54, so that the cutting tool 56 is placed between the guide shaft 54 and the control rod 52. The two parts are inserted in the flow tube 12, the control rod through one of the transducer holders 20, 22 and the guide shaft through the opposite transducer holder 20, 22, and the two parts are then mechanical connected, when the two parts meet inside the flow tube, for instance by being screwed together.

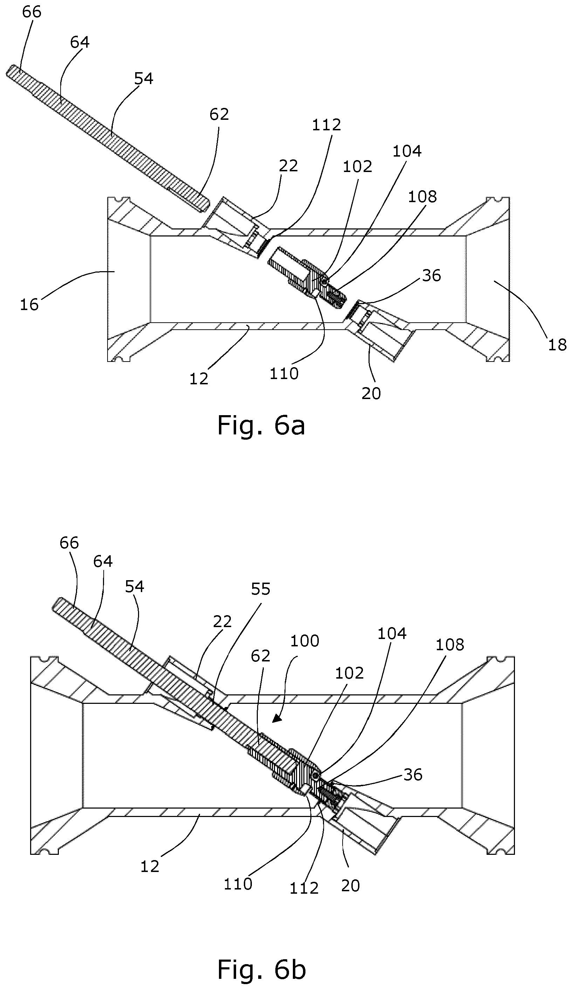

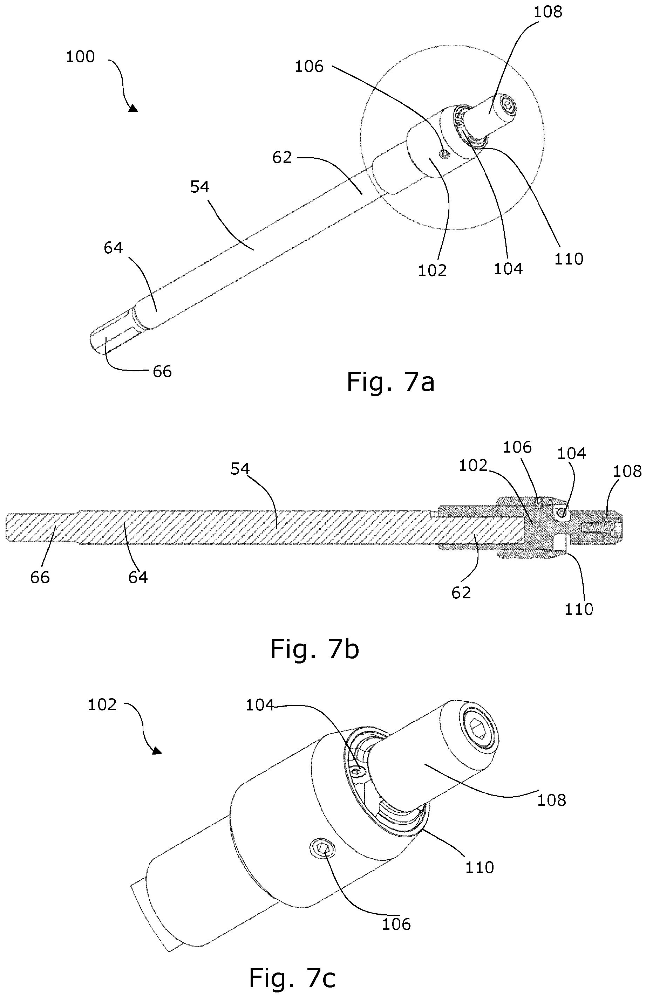

Fig. 6a and 6b illustrates the use of the transducer seat-machining tool 100. The transducer seat-machining tool 100, also illustrated in fig. 7a, 7b and 7c, comprising a tool head 102, and a guide shaft 54. The tool head 102 comprising a transducer seat-cutting tool 104. In the shown embodiment, the tool head 102 is inside the flow tube 12, entering the flow tube 12 through the inlet 16 or the outlet 18 before being mechanical connected to the guide shaft 54.

When mechanical connecting the transducer seat-machining tool 100, the first end 62 of the guide shaft 54 is inserted through the opening 24 of the transducer holder 22, opposite to the transducer holder 20 to be machined. The tool head 102 is then, inside the flow tube 12, fixed to the first end 62 of the guide shaft 54 and fixated with a screw 106.

After the transducer seat-machining tool 100 has been mechanical connected, the transducer seat-machining tool 100 is positioned in a position, wherein the transducer seat-cutting tool 104 is engaging the transducer seat 36, so that the transducer seat-machining tool 100 is machining the transducer seat 36.

The tool head 102 is mechanically guided by a part 55 of the transducer seat-machining tool 100 engaging with the transducer holder 22 opposite placed to the transducer holder 20 to be machined.

When finished machining the transducer seat 36, the tool is disconnected and mechanically reconnected with the guide shaft 54, now inserted through the opening of the just machined transducer holder 20, to make the transducer seat-cutting tool 104 engaging and machining the transducer seat 36 of the opposite transducer holder 22.

The cutting is done by rotating the transducer seat-machining tool 100. The transducer seat-cutting tool 104, when being rotated, is cutting away excess material of the transducer seat 36 being machined. The rotating may be done by using a drill. The transducer seat-cutting tool 104 may be connected to a drill by a drill connector 66 at the second end 64 of the guide shaft 54.

Fig. 7a and 7b illustrates the transducer seat-machining tool 100, and fig. 7c, which is an enlarged section of the part encircled in Fig. 7a, illustrates the tool head 102. The transducer seat-machining tool 100 comprising a tool head 102, and a guide shaft 54. The tool head 102 comprising a transducer seat-cutting tool 104. The guide shaft 54 comprising a first end 62 and a second end 64. The first end 62 is inserted into the tool head 102, for instance the first end 62 can be screwed into the tool head 102 and then fixed by a screw 106. The second end 64 comprising a drill connector 66, which can be used by attaching a drill to rotate the transducer seat-machining tool 100, when drilling a transducer seat 36. The tool head 102 comprising a guide bushing 108.

When placing the transducer seat-machining tool 100 in a position to machine the transducer seat 36, the guide bushing 108 is placed in the opening 24 of the transducer holder 20, 22 to be machined. The guide bushing is supported by the guide hole 34, while the guide shaft 54 is supported by the guide hole 34 of the opposite transducer holder 20, 22, obtaining a stable and precise processing of the transducer seat 36, removing excess material from the transducer seat 36.

Further, the tool head 102 comprising a stop bushing 110. The stop bushing 110 ensures that the transducer seat 36 will not be too deep. When the transducer seat 36 is in the required distance from the inward end 112 of the transducer holder 20, 22 the stop bushing 110 encounter the inward end 112 and can go no deeper. The inward end 112 of the transducer holder 20, 22 is an integral part of the flow tube 12, and the stop bushing 110 may, in an alternative design, be stopped by another part of the flow tube 12.

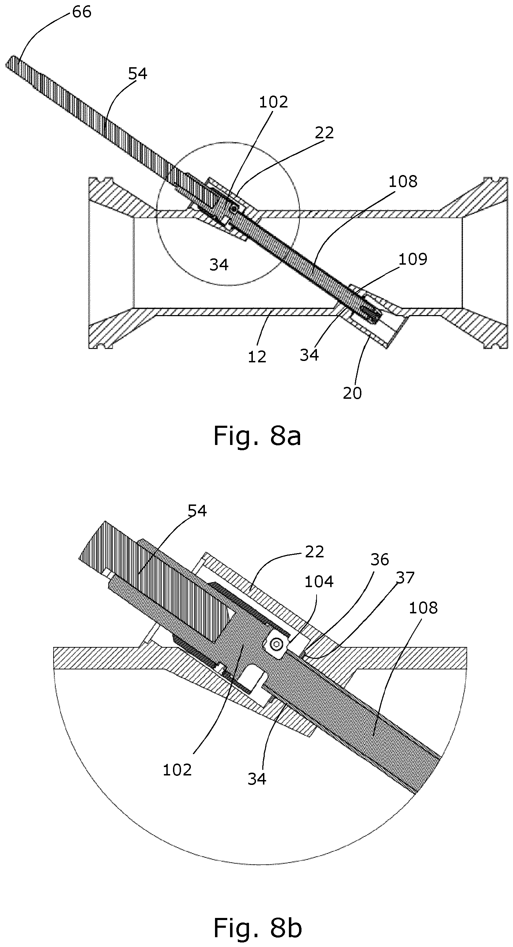

Fig. 8a and Fig. 8b, which is an enlarged section of the part encircled in Fig. 8a, illustrates an alternative embodiment, where the tool head 102, of the transducer seat-machining tool 100, is placed outside the flow tube 12. The transducer housings 26, 27 in this embodiment is mounted from the outside, and therefore the mounting surface 37 of the transducer seat 36 is facing outward. The tool head 102 comprising a guide bushing 108, the guide bushing 108 is extended to pass through both the guide hole 34 of the transducer holder 22, comprising the transducer seat 36 to be machined, and the guide hole 34 of the opposite placed transducer holder 20. A part 109 of the transducer seat-machining tool is engaging the transducer holder 20, opposite placed to the transducer holder 22 to be machined, mechanically guiding the tool head 102. The guide shaft 54 in this embodiment is used only to connect a drill to the drill connector 66, to be able to rotate the transducer seat-machining tool 100 when machining the transducer seat 36.

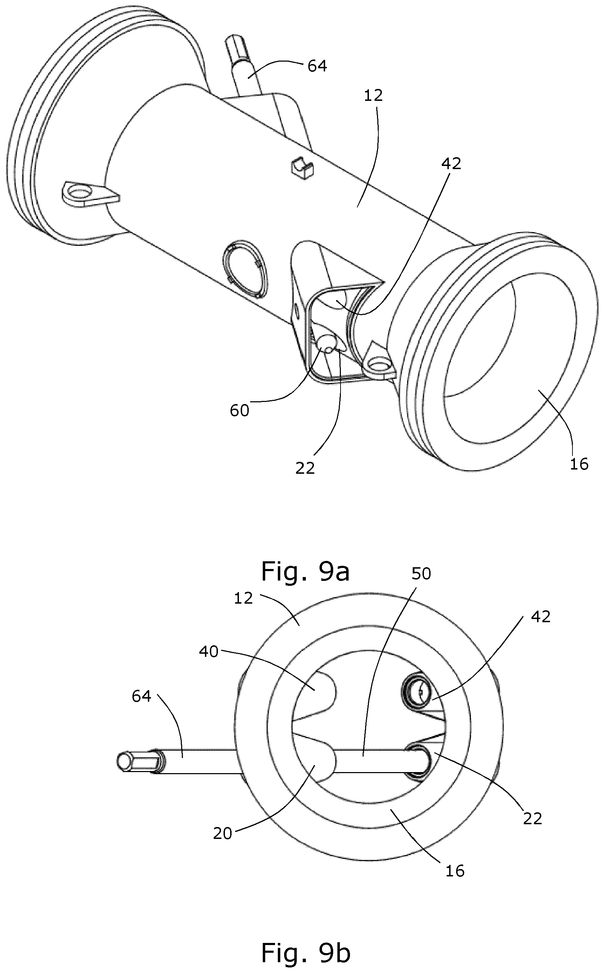

Fig. 9a and Fig. 9b illustrates a flow tube 12 comprising an additional pair of transducer holders 40, 42, so that the flow tube 12 comprising two pairs of transducer holders. In fig. 9a is shown the transducer holder 22 of a first pair of transducer holders 20, 22, where the transducer holder 20 is not visible on fig. 9a, but the second end 60 of the control rod is visible, going out of the opening of the transducer holder 22. The second end 64 of the guide shaft is visible on the other side of the flow tube 12, going out of the transducer holder 20 (not visible). Next to the transducer holder 22 another transducer holder 42 of a second pair of transducer holders is visible.

Fig. 9b shows a view of the flow tube 12 through the inlet 16. It shows the first pair of transducer holders 20, 22 and the second pair of transducer holders 40, 42. The guide hole-machining tool 50 is mechanical connected and going through the first pair of transducer holders 20, 22. When processing the guide holes of the first pair of transducer holders 20, 22 is completed, the guide hole-machining tool 50 can be disconnected and moved to the second pair of transducer holders 40, 42 and be reconnected to process the guide holes of the second pair of transducer holders 40, 42.

Although the present invention has been described in connection with the specified embodiments, it should not be construed as being in any way limited to the presented examples. The scope of the present invention is set out by the accompanying claim set.

## Claims

1. A method of manufacturing an ultrasonic flow meter flow tube (12), wherein the flow tube (12) comprises transducer holders (20, 22), each transducer holder (20, 22) comprises an opening (24) and a transducer seat (36) for mounting of a transducer housing (26, 27), and each transducer holder (20, 22) is forming one part of a pair of oppositely placed transducer holders (20, 22),
**characterized in**
**that** the method comprises the following steps:
- providing a transducer seat-machining tool (100) for machining the transducer seat (36) of one of the pair of transducer holders (20, 22), the transducer seat-machining tool (100) comprising a tool head (102) mechanically connectable to a guide shaft (54),
- mechanically connecting the tool head (102) and the guide shaft (54),
- mechanically guiding the tool head (102) by a part (55, 109) of the transducer seat-machining tool (100) engaging with the transducer holder opposite placed to the transducer holder to be machined,
- machining the transducer seat (36) of the transducer holder (20, 22) to be machined with the tool head (102);
each of the pair of transducer holders (20, 22) comprises a guide hole (34), and the tool head (102) comprises a guide bushing (108), the method further comprising the following steps:
- guiding the tool head (102) of the transducer seat-machining tool (100), ensuring a surface of the transducer seat (36) is perpendicular to a coaxial axis (28), by
∘ positioning the guide bushing (108) in the guide hole (34) of the transducer holder (20, 22) to be machined, and
∘ positioning the guide shaft (54) or the guide bushing (108) in a position engaging the guide hole (34) of the opposite placed transducer holder (20, 22).

2. The method according to claim 1, wherein the tool head (102) comprising a transducer seat-cutting tool (104), and the method further comprises the following steps:
- positioning the transducer seat-machining tool (100) in a position, wherein the transducer seat-cutting tool (104) is engaging the transducer seat (36) of the transducer holder (22, 24),
- machining the transducer seat (36) by the transducer seat-cutting tool (104).

3. The method according to claim 2, wherein machining the transducer seat (36) comprises the following steps:
- rotating the transducer seat-machining tool (100),
- cutting away excess material of the transducer seat (36) by the transducer seat-cutting tool (104).

4. The method according to claims 1-3, wherein the tool head (102) comprising a stop bushing (110), and the transducer seat-machining tool (100), machining the transducer seat (36), stops machining, when the stop bushing (110) gets in contact with the flow tube (12).

5. The method according to claims 1-4, wherein the method further comprises the step:
- placing the tool head (102) of the transducer seat-machining tool (100) inside the flow tube (12).

6. The method according to claims 1-4, wherein the method further comprises the step:
- placing the tool head (102) of the transducer seat-machining tool (100) outside the flow tube (12).

7. The method according to claim 1, wherein each of the transducer holders (20, 22) comprising the guide hole (34) and a guide hole wall (35),
the method further comprises the following steps:
- providing a guide hole-machining tool (50), the guide hole-machining tool (50) comprising a control rod (52) and the guide shaft (54),
- positioning the guide shaft (54) in a position going through the opening (24) of one of the pair of transducer holders (20, 22),
- positioning the control rod (52) in a position going through the opening of the corresponding opposite placed transducer holder (20, 22),
- mechanically connecting the control rod (52) and the guide shaft (54), and
- machining the guide hole walls (35) by the guide hole-machining tool (50).

8. The method according to claim 7, wherein the guide hole-machining tool (50) comprising a guide hole-cutting tool (56) mounted between the control rod (52) and the guide shaft (54), and machining the guide hole walls (35) by the guide hole-machining tool (50),
the method further comprises the following steps:
- positioning the guide hole-machining tool (50) in a position, wherein the guide hole-cutting tool (56) is engaging the guide hole wall (35) of one of the transducer holders (20) in the pair of transducer holders (20, 22), and
- machining the engaged guide hole wall (35) with the guide hole-cutting tool (56),
- moving the guide hole-machining tool (50) to a position, wherein the guide hole-cutting tool (56) is engaging the guide hole wall (35) of the opposite placed transducer holder (22) in the pair of transducer holders (20, 22), and
- machining the engaged guide hole wall (35) of the opposite placed transducer holder (22) with the guide hole-cutting tool (56).

9. The method according to claims 1-8, wherein the method further comprises the step:
- casting the flow tube (12), the flow tube comprising transducer holders (20, 22) cast integrally with the flow tube (12).

10. The method according to claims 1-8, wherein the method further comprises the following steps:
- casting the flow tube (12) without transducer holders, and
- welding the transducer holders (20, 22) into the flow tube (12).

## Patentansprüche

1. Verfahren zum Herstellen eines
Ultraschalldurchflussmesserdurchflussrohrs (12), wobei das Durchflussrohr (12) Wandlerhalterungen (20, 22) umfasst, wobei jede Wandlerhalterung (20, 22) eine Öffnung (24) und einen Wandlersitz (36) zum Montieren eines Wandlergehäuses (26, 27) umfasst und jede Wandlerhalterung (20, 22) einen Teil eines Paars von gegenüberliegend platzierten Wandlerhalterungen (20, 22) bildet,
**dadurch gekennzeichnet, dass** das Verfahren die folgenden Schritte umfasst:
- Bereitstellen eines Wandlersitzbearbeitungswerkzeugs (100) zum Bearbeiten des Wandlersitzes (36) von einem des Paars von Wandlerhalterungen (20, 22), wobei das Wandlersitzbearbeitungswerkzeug (100) einen Werkzeugkopf (102) umfasst, der mechanisch mit einer Führungswelle (54) verbindbar ist,
- mechanisches Verbinden des Werkzeugkopfs (102) und der Führungswelle (54),
- mechanisches Führen des Werkzeugkopfs (102) durch einen Teil (55, 109) des Wandlersitzbearbeitungswerkzeugs (100), der in die Wandlerhalterung, die gegenüber der zu bearbeitenden Wandlerhalterung platziert ist, eingreift,
- Bearbeiten des Wandlersitzes (36) der Wandlerhalterung (20, 22), die mit dem Werkzeugkopf (102) zu bearbeiten ist;
wobei jedes von dem Paar von Wandlerhalterungen (20, 22) ein Führungsloch (34) umfasst und der Werkzeugkopf (102) eine Führungsbuchse (108) umfasst, wobei das Verfahren ferner die folgenden Schritte umfasst:
- Führen des Werkzeugkopfs (102) des
Wandlersitzbearbeitungswerkzeugs (100), wodurch sichergestellt wird, dass eine Fläche des Wandlersitzes (36) senkrecht zu einer Koaxialachse (28) ist, durch
∘ Positionieren der Führungsbuchse (108) in dem Führungsloch (34) der zu bearbeitenden Wandlerhalterung (20, 22) und
o Positionieren der Führungswelle (54) oder der Führungsbuchse (108) in einer Position, die in das Führungsloch (34) der gegenüberliegend platzierten Wandlerhalterung (20, 22) eingreift.

2. Verfahren nach Anspruch 1, wobei der Werkzeugkopf (102) ein Wandlersitzschneidwerkzeug (104) umfasst und das Verfahren ferner die folgenden Schritte umfasst:
- Positionieren des Wandlersitzbearbeitungswerkzeugs (100) in einer Position, wobei das Wandlersitzschneidwerkzeug (104) in den Wandlersitz (36) der Wandlerhalterung (22, 24) eingreift,
- Bearbeiten des Wandlersitzes (36) durch das Wandlersitzschneidwerkzeug (104).

3. Verfahren nach Anspruch 2, wobei das Bearbeiten des Wandlersitzes (36) die folgenden Schritte umfasst:
- Drehen des Wandlersitzbearbeitungswerkzeugs (100),
- Wegschneiden von überschüssigem Material des Wandlersitzes (36) durch das Wandlersitzschneidwerkzeug (104).

4. Verfahren nach Anspruch 1-3, wobei der Werkzeugkopf (102) eine Anschlagbuchse (110) umfasst und das Wandlersitzbearbeitungswerkzeug (100), das den Wandlersitz (36) bearbeitet, die Bearbeitung stoppt, wenn die Anschlagbuchse (110) das Durchflussrohr (12) berührt.

5. Verfahren nach Anspruch 1-4, wobei das Verfahren ferner den folgenden Schritt umfasst:
- Platzieren des Werkzeugkopfs (102) des Wandlersitzbearbeitungswerkzeugs (100) innerhalb des Durchflussrohrs (12).

6. Verfahren nach Anspruch 1-4, wobei das Verfahren ferner den folgenden Schritt umfasst:
- Platzieren des Werkzeugkopfs (102) des Wandlersitzbearbeitungswerkzeugs (100) außerhalb des Durchflussrohrs (12).

7. Verfahren nach Anspruch 1, wobei jede der Wandlerhalterungen (20, 22) das Führungsloch (34) und eine Führungslochwand (35) umfasst,
wobei das Verfahren ferner die folgenden Schritte umfasst:
- Bereitstellen eines Führungslochbearbeitungswerkzeugs (50), wobei das Führungslochbearbeitungswerkzeug (50) eine Steuerstange (52) und die Führungswelle (54) umfasst,
- Positionieren der Führungswelle (54) in einer Position, die durch die Öffnung (24) von einem des Paars von Wandlerhalterungen (20, 22) verläuft,
- Positionieren der Steuerstange (52) in einer Position, die durch die Öffnung der entsprechenden gegenüberliegend platzierten Wandlerhalterung (20, 22) verläuft,
- mechanisches Verbinden der Steuerstange (52) und der Führungswelle (54) und
- Bearbeiten der Führungslochwände (35) durch das Führungslochbearbeitungswerkzeug (50).

8. Verfahren nach Anspruch 7, wobei das Führungslochbearbeitungswerkzeug (50) ein Führungslochschneidwerkzeug (56) umfasst, das zwischen der Steuerstange (52) und der Führungswelle (54) montiert ist, und die Führungslochwände (35) durch das Führungslochbearbeitungswerkzeug (50) bearbeitet werden,
wobei das Verfahren ferner die folgenden Schritte umfasst:
- Positionieren des Führungslochbearbeitungswerkzeugs (50) in einer Position, wobei das Führungslochschneidwerkzeug (56) in die Führungslochwand (35) von einer der Wandlerhalterungen (20) in dem Paar von Wandlerhalterungen (20, 22) eingreift, und
- Bearbeiten der in Eingriff genommenen Führungslochwand (35) mit dem Führungslochschneidwerkzeug (56),
- Bewegen des Führungslochbearbeitungswerkzeugs (50) in eine Position, wobei das Führungslochschneidwerkzeug (56) in die Führungslochwand (35) der gegenüberliegend platzierten Wandlerhalterung (22) in dem Paar von Wandlerhalterungen (20, 22) eingreift, und
- Bearbeiten der in Eingriff genommenen Führungslochwand (35) der gegenüberliegend platzierten Wandlerhalterung (22) mit dem Führungslochschneidwerkzeug (56).

9. Verfahren nach Anspruch 1-8, wobei das Verfahren ferner den folgenden Schritt umfasst:
- Gießen des Durchflussrohrs (12), wobei das Durchflussrohr Wandlerhalterungen (20, 22) umfasst, die einstückig mit dem Durchflussrohr (12) gegossen sind.

10. Verfahren nach Anspruch 1-8, wobei das Verfahren ferner die folgenden Schritte umfasst:
- Gießen des Durchflussrohrs (12) ohne Wandlerhalterung und
- Schweißen der Wandlerhalterungen (20, 22) in das Durchflussrohr (12).

## Revendications

1. Procédé de fabrication d'un tube d'écoulement (12) de débitmètre à ultrasons, ledit tube d'écoulement (12) comprenant des supports de transducteur (20, 22), chaque support de transducteur (20, 22) comprenant une ouverture (24) et un siège de transducteur (36) pour le montage d'un boîtier de transducteur (26, 27), et chaque support de transducteur (20, 22) formant une partie d'une paire de supports de transducteur (20, 22) placés l'un en face de l'autre,
**caractérisé en ce que** le procédé comprend les étapes suivantes :
- fourniture d'un outil d'usinage (100) de siège de transducteur destiné à usiner le siège de transducteur (36) de l'un de la paire de supports de transducteur (20, 22), l'outil d'usinage (100) de siège de transducteur comprenant une tête d'outil (102) pouvant être raccordée mécaniquement à un arbre de guidage (54),
- raccordement mécanique de la tête d'outil (102) et de l'arbre de guidage (54),
- guidage mécanique de la tête d'outil (102) par une partie (55, 109) de l'outil d'usinage (100) de siège de transducteur venant en prise avec le support de transducteur placé en face du support de transducteur à usiner,
- usinage du siège de transducteur (36) du support de transducteur (20, 22) à usiner avec la tête d'outil (102) ;
chacun de la paire de supports de transducteur (20, 22) comprenant un trou de guidage (34), et la tête d'outil (102) comprend une douille de guidage (108), le procédé comprenant en outre les étapes suivantes :
- guidage de la tête d'outil (102) de l'outil d'usinage (100) de siège de transducteur, en s'assurant qu'une surface du siège de transducteur (36) est perpendiculaire à un axe coaxial (28), par
∘ le positionnement de la douille de guidage (108) dans le trou de guidage (34) du support de transducteur (20, 22) à usiner, et
∘ le positionnement de l'arbre de guidage (54) ou de la douille de guidage (108) dans une position de mise en prise avec le trou de guidage (34) du support de transducteur (20, 22) placé en face.

2. Procédé selon la revendication 1, ladite tête d'outil (102) comprenant un outil de découpe (104) de siège de transducteur, et ledit procédé comprenant en outre les étapes suivantes :
- le positionnement de l'outil d'usinage (100) de siège de transducteur dans une position, ledit outil de découpe (104) de siège de transducteur venant en prise avec le siège de transducteur (36) du support de transducteur (22, 24),
- usinage du siège du transducteur (36) par l'outil de découpe (104) de siège du transducteur.

3. Procédé selon la revendication 2, ledit usinage du siège de transducteur (36) comprenant les étapes suivantes :
- rotation de l'outil d'usinage (100) de siège de transducteur,
- découpe du matériau en excès du siège de transducteur (36) à l'aide de l'outil de découpe (104) de siège du transducteur.

4. Procédé selon les revendications 1-3, ladite tête d'outil (102) comprenant une douille d'arrêt (110), et ledit outil d'usinage (100) de siège de transducteur, usinant le siège de transducteur (36), arrêtant l'usinage, lorsque la douille d'arrêt (110) entre en contact avec le tube d'écoulement (12).

5. Procédé selon les revendication 1-4, ledit procédé comprenant en outre l'étape de :
- placement de la tête d'outil (102) de l'outil d'usinage (100) de siège de transducteur à l'intérieur du tube d'écoulement (12).

6. Procédé selon les revendication 1-4, ledit procédé comprenant en outre l'étape de :
- placement de la tête d'outil (102) de l'outil d'usinage (100) de siège de transducteur à l'extérieur du tube d'écoulement (12).

7. Procédé selon la revendication 1, chacun des supports de transducteur (20, 22) comprenant le trou de guidage (34) et une paroi (35) de trou de guidage,
ledit procédé comprenant en outre les étapes suivantes :
- fourniture d'un outil d'usinage (50) de trou de guidage, l'outil d'usinage (50) de trou de guidage comprenant une tige de commande (52) et l'arbre de guidage (54),
- positionnement de l'arbre de guidage (54) dans une position traversant l'ouverture (24) de l'un de la paire de supports de transducteur (20, 22),
- positionnement de la tige de commande (52) dans une position traversant l'ouverture du support de transducteur (20, 22) correspondant placé en face,
- raccordement mécanique de la tige de commande (52) et de l'arbre de guidage (54), et
- usinage des parois (35) de trou de guidage par l'outil d'usinage (50) de trou de guidage.

8. Procédé selon la revendication 7, ledit outil d'usinage (50) de trou de guidage comprenant un outil de découpe (56) de trou de guidage monté entre la tige de commande (52) et l'arbre de guidage (54), et l'usinage des parois (35) de trou de guidage par l'outil d'usinage (50) de trou de guidage,
ledit procédé comprenant en outre les étapes suivantes :
- positionnement de l'outil d'usinage (50) de trou de guidage dans une position, ledit outil de découpe (56) de trou de guidage se mettant en prise avec la paroi (35) de trou de guidage de l'un des supports de transducteur (20) dans la paire de supports de transducteur (20, 22), et
- usinage de la paroi (35) de trou de guidage en prise avec l'outil de découpe (56) de trou de guidage,
- déplacement de l'outil d'usinage (50) de trou de guidage vers une position, ledit outil de découpe (56) de trou de guidage se mettant en prise avec la paroi (35) de trou de guidage du support de transducteur (22) placé en face dans la paire de supports de transducteur (20, 22), et
- usinage de la paroi (35) de trou de guidage en prise du support de transducteur (22) placé en face avec l'outil de découpe (56) de trou de guidage.

9. Procédé selon les revendications 1-8, ledit procédé comprenant en outre l'étape de :
- coulage du tube d'écoulement (12), le tube d'écoulement comprenant des supports de transducteur (20, 22) coulés d'un seul tenant avec le tube d'écoulement (12).

10. Procédé selon les revendications 1-8, ledit procédé comprenant en outre les étapes suivantes :
- coulage du tube d'écoulement (12) sans supports de transducteur, et
- soudage des supports de transducteur (20, 22) dans le tube d'écoulement (12).
